# EUROPEAN PATENT APPLICATION

(11) **EP 4 640 526 A1**
(43) Date of publication of application: **29.10.2025**
(21) Application number: 23907616.9
(22) Date of filing: 15.12.2023
(51) Int. Cl.: B62D 21/15, H01M 50/249, B60K 1/04, B62D 25/02, B62D 27/02, B62D 29/00

(54) **FRAME FOR ELECTRIC VEHICLE**

(30) Priority: 21.12.2022 KR 20220180574
(71) Applicant: POSCO Co., Ltd, Pohang-si, Gyeongsangbuk-do 37859 (KR)
(72) Inventor: LEE, Gyu-Min, Incheon 21985 (KR); LEE, Hong-Woo, Incheon 21985 (KR); KIM, Jaehyun, Incheon 21985 (KR); KIM, Hwi-Geon, Incheon 21985 (KR)
(74) Representative: Meissner Bolte Partnerschaft mbB
(86) International application number: PCT/KR2023/020738
(87) International publication number: WO 2024/136330

(57) **Abstract**

The present invention relates to a frame for an electric vehicle. A frame for an electric vehicle, according to one embodiment of the present invention, has a battery space in which a battery is located, and comprises: a side frame which is located at a portion of the periphery of the battery space, has a first hollow portion of a closed cross-section therein, and extends in a first direction which is the longitudinal direction of the vehicle; and a reinforcement frame which is located in the first hollow portion and of which at least a part comes into contact with the side frame. The reinforcement frame includes a first surface parallel to a second direction which is the height direction of the vehicle, and a second surface extending from the first surface and formed to be in contact with a part of the side frame, wherein the second surface may have raised portions and recessed portions that are protruding and indented, respectively, in the second direction.

## Description

### Technical Field

The present disclosure relates to a frame for an electric vehicle, and to a frame for an electric vehicle of a body-on-frame type electric vehicle in which a reinforcing frame is located on an inner side of a side frame.

### Background Art

As one of vehicle body structure, there is provided a body-on-frame structure in which a vehicle body is assembled on a frame and the vehicle body on the frame and the frame may be separated. A body-on-frame structure is commonly used in vehicles such as SUVs, trucks, buses, or the like. The body-on-frame structure is mainly used in vehicles that can withstand high loads or which require traction.

When the body-on-frame structure is used in an electric vehicle, the most important roles of the frame in conventional internal combustion engine vehicles were to support the overall load of the vehicle, provide rigidity, and protect passengers in the event of an external collision, but in an electric vehicle, in addition to protecting passengers, protecting a battery has also become a very important factor. The battery is commonly located on the bottom surface, takes up a lot of volume, and also weighs a lot.

Therefore, it is difficult to protect against collisions and increase weight due to the installation of a large-capacity battery with a shape, the same as that of the body-on-frame structure used in internal combustion engine vehicles.

In addition, some automobiles use an aluminum extrusion, or the like as a reinforcing material in an internal space of the frame, but there is a problem in that this is expensive and is not environmentally friendly.

Therefore, there is a need for a structure of a frame for an electric vehicle that can solve the problems described above.

(Patent Document 1) Korean Publication No. 10-2022-0122089 (Published on September 2, 2022)

### Summary of Invention

### Technical Problem

The present disclosure is intended to solve the above-described problems, and an aspect of the present disclosure is to provide a body-on-frame-type frame structure having excellent shock absorption capacity for lateral impacts, in a frame for an electric vehicle.

### Solution to Problem

In order to achieve the above-described purpose, in the present disclosure, provided is a frame for an electric vehicle formed as follows.

According to an embodiment of the present disclosure, provided is a frame for an electric vehicle having defined therein a battery space in which a battery is located, the frame for an electric vehicle, including: a side frame located in a portion of the periphery of the battery space, having a first hollow portion with a closed cross-section formed therein, and extending in a first direction, which is a longitudinal direction of a vehicle; and a reinforcing frame located in the first hollow portion, wherein at least a portion of the reinforcing frame is in contact with the side frame, wherein the reinforcing frame includes a first surface parallel to a second direction, which is a height direction of the vehicle, and a second surface formed to extend from the first surface, and to be in contact with a portion of the side frame, and the second surface has a protruding portion and a recess portion, which are protruding and indented, in the second direction.

In addition, the reinforcing frame may be formed to extend in the first direction.

In addition, the protruding portion and the recess portion may be alternately repeated in the first direction to form a waveform.

In addition, the frame for an electric vehicle may further include a side sill located on one side of the side frame in the second direction, and having a second hollow portion with a closed cross-section formed therein to extend in the first direction, and a reinforcing frame including a bent or curved shape, and located in the second hollow portion and continuous in the first direction.

In addition, an angle at which the first and second surfaces are connected may be an obtuse angle.

In addition, the second surface may be formed at both ends of the first surface in the second direction, and the reinforcing frame may be symmetrical to each other with respect to a third direction, which is a width direction of the vehicle.

In addition, the reinforcing frame may further include a flange formed parallel to the first surface and extending from the second surface, and may be welded and joined to the side frame at the flange.

In addition, the side frame may include a first side frame adjacent to the battery space and a second side frame adjacent to the side sill, and may be formed by combining the first side frame and the second side frame. At least a portion of the first surface may be in contact with the second side frame, and may be welded or joined by an adhesive material at the contact portion.

In addition, the side frame may be formed of aluminum or a steel material.

In addition, the side frame and the reinforcing frame may be formed of different materials.

In addition, the reinforcing frame may be processed by bending and forming a single plate material.

In addition, the plate material may be a steel material having a tensile strength of 980 MPa or more.

According to another embodiment, provided is a frame for an electric vehicle having defined therein a battery space in which a battery is located, the frame for an electric vehicle, including: a side frame located in a portion of the periphery of the battery space, having a first hollow portion with a closed cross-section formed therein, and extending in a first direction, which is a longitudinal direction of a vehicle; a reinforcing frame located in the first hollow portion, and including a surface formed in a second direction, which is a width direction of the vehicle; and a side sill located on one side of the side frame in the second direction, and having a second hollow portion with a closed cross-section formed therein to extend in the first direction, wherein the reinforcing frame includes a first surface parallel to the second direction, which is a height direction of the vehicle, and a second surface formed to extend from the first surface, and to be in contact with a portion of the side frame, and an angle at which the first and second surfaces are connected is an obtuse angle.

### Advantageous Effects of Invention

As set forth above, in the present disclosure, through the structure described above, a frame structure having excellent shock absorption capacity by an external collision and excellent strength to withstand the weight of the vehicle itself may be provided.

In addition, when a reinforcement is formed of a material such as a steel material, rather than aluminum, there is the advantage of reasonable manufacturing costs.

### Brief description of drawings

FIG. 1 is a schematic exploded view of an electric vehicle with a body-on-frame structure.
FIG. 2 is a cross-sectional view of a portion of a structure of a frame for an electric vehicle according to an embodiment of the present disclosure, shown as A-A' in FIG. 1.
FIG. 3a is a partial perspective view of a side frame and a reinforcing frame according to an embodiment of the present disclosure.
FIG. 3b is a cross-sectional view of a side frame and a reinforcing frame according to an embodiment of the present disclosure.
FIG. 4 is a perspective view of a reinforcing frame according to an embodiment of the present disclosure.
FIG. 5 is a perspective view of a side sill according to an embodiment of the present disclosure.
FIG. 6 is a perspective view of a side sill according to another embodiment of the present disclosure.
FIG. 7 is a perspective view of a side sill according to another embodiment of the present disclosure.
FIG. 8 is a cross-sectional view of a portion of a structure of a frame for an electric vehicle according to another embodiment of the present disclosure, shown as A-A' in FIG. 1.
FIG. 9 is a partial perspective view of a side frame and a reinforcing frame according to an embodiment of the present disclosure.
FIG. 10 is a perspective view of a reinforcing frame according to another embodiment of the present disclosure.
FIG. 11 is a perspective view of a portion of a conventional side frame.
FIG. 12 is a graph of a force and displacement for support strength compared through a simulation when an external impact is applied in a conventional side frame and a conventional reinforcing frame and in a side frame and a reinforcing frame according to an embodiment of the present disclosure.

### Mode for Invention

Hereinafter, specific embodiments of the present disclosure will be described with reference to the attached drawings. However, the spirit of the present disclosure is not limited to the presented embodiments, and other regressive inventions or other embodiments included in the spirit of the present disclosure may be easily suggested by a person skilled in the art who understands the spirit of the present disclosure by adding, changing, or deleting other components within the scope of the same spirit, but it will also be said to be included within the scope of the present disclosure.

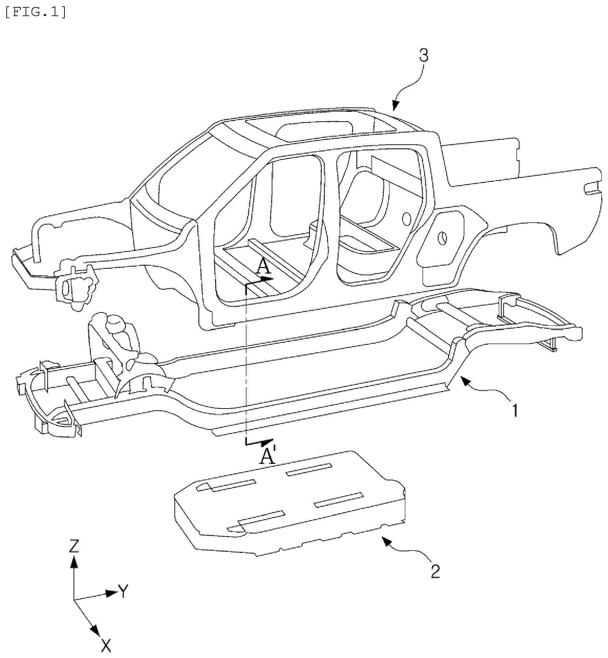

FIG. 1 schematically illustrates a structure of an electric vehicle, which is a body-on-frame structure.

An electric vehicle having a body-on-frame structure has a frame 1 and a body 3 assembled on the frame. Since it is an electric vehicle, a battery 2 is located on the inside of the frame 1 and occupies a large area.

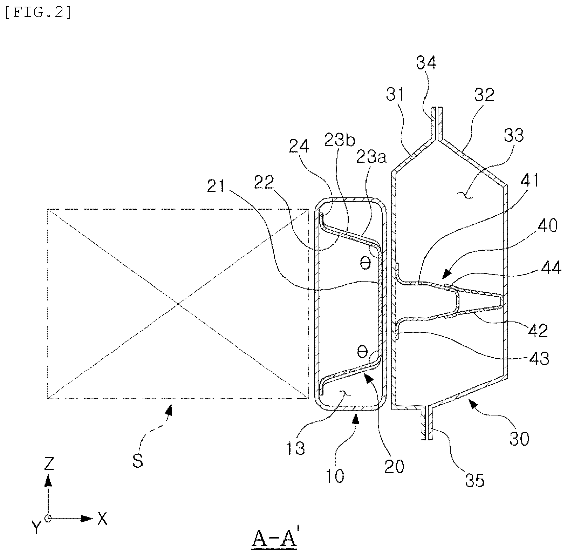

FIGS. 2 to 7 illustrate a frame for an electric vehicle according to an embodiment of the present disclosure.

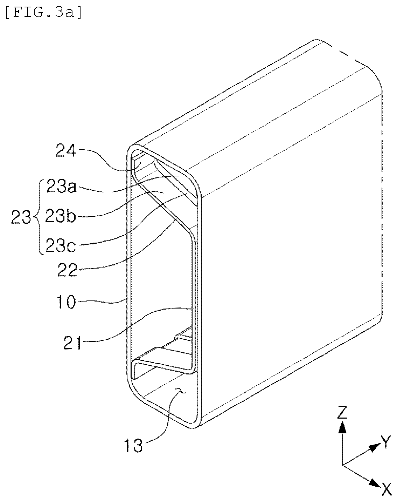

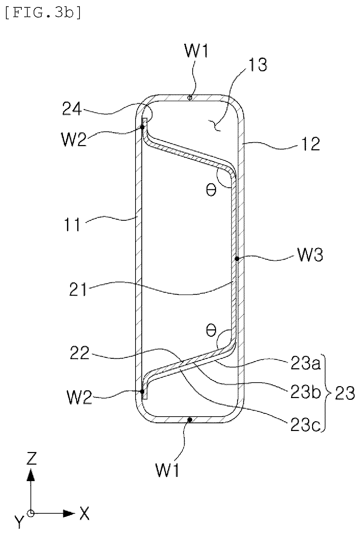

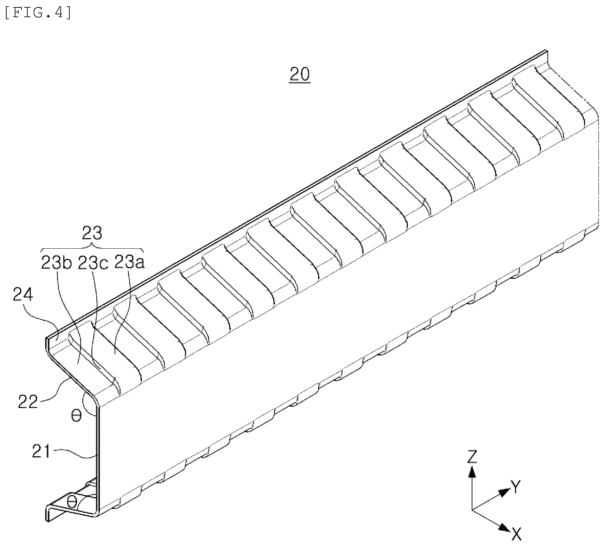

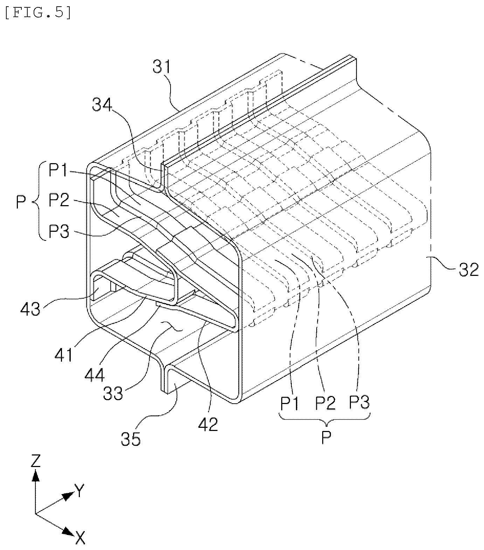

FIG. 2 is a cross-sectional view illustrating a structure of a frame for an electric vehicle according to an embodiment of the present disclosure, and illustrates a cross-sectional view of portion A-A' in a state in which the electric vehicle body, frame, and battery of FIG. 1 are assembled. FIG. 3a is a perspective view of a portion of a side frame and a reinforcing frame according to an embodiment of the present disclosure, FIG. 3b is a cross-sectional view of a side frame and a reinforcing frame according to an embodiment of the present disclosure, and FIG. 4 is a perspective view of a reinforcing frame according to an embodiment of the present disclosure. FIGS. 5 to 7 are perspective views of a side sill and a reinforcing frame according to an embodiment of the present disclosure.

A frame for an electric vehicle according to an embodiment of the present disclosure includes a side frame 10 and a reinforcing frame 20.

A battery space S in which a battery is located may be defined. The space in which the battery is located is not shown in a specific form in FIG. 2, but is arbitrarily illustrated to show a location at which the battery exists.

The side frame 10 may be located in a portion of the periphery of the battery space S, have a first hollow portion 12 with a closed cross-section formed therein, and extend in a first direction, which is a longitudinal direction (Y-direction) of a vehicle.

The side frame 10 may be formed to extend in a first direction, which is a longitudinal direction of the vehicle, of a portion of the periphery of the battery space S. A cross-sectional shape of the side frame 10 in a third direction, which is a width direction (X-direction) of the vehicle, may have a first hollow portion 13, with a closed cross-section formed therein. As an example, the cross-sectional shape may be a polygon, and corners thereof may be rounded. However, an embodiment of the present disclosure is not limited to the shapes mentioned.

As an example, the side frame 10 may include a first side frame 11 adjacent to the battery space S and a second side frame 12 adjacent to the side sill 30, and may be integrally formed by combining the first side frame 11 and the second side frame 12. The combination may be welding, and a first joint portion W1 may be formed. It may be formed as described above, to provide convenience in production.

As an example, the side frame 10 may be formed of aluminum or a steel material. The side frame 10 may be formed of aluminum and a steel material to have the weight and support strength required for use in an electric vehicle. When the side frame 10 is formed of a steel material, it may be more advantageous in terms of costs. However, the material of the side frame 10 is not limited to the materials mentioned above, and includes all materials that would be commonly known for use in the related art by ordinarily skilled technicians.

The reinforcing frame 20 may be located in the first hollow portion 13, and at least a portion thereof may be in contact with the side frame 10.

For example, the reinforcing frame 20 may include a first surface 21 parallel to a second direction, which is a height direction (Z direction) of the vehicle, and a second surface 22 formed to extend from the first surface 21 and to be in contact with a portion of the side frame 10, wherein the second surface 22 may have a protruding portion 23a and a recess portion 23c, which are protruding and indented, in the second direction.

The reinforcing frame 20 may be formed to extend in the first direction.

The reinforcing frame 20 is located in the first hollow portion 13 located on the inside of the side frame 10 and, when an impact occurs from the outside of the vehicle, the reinforcing frame 20 is configured to prevent the side frame 11 from being deformed and the battery space S located therein from being deformed as much as possible. A reinforcing frame 20 is further provided, in addition to the side frame 10, thereby providing an excellent effect of energy absorption capacity due to external impacts. Likewise the side frame 10, the reinforcing frame 20 is formed to extend in a first direction, so that an effect of absorbing energy as a whole in the first direction in which the side frame 10 is formed may be increased.

The reinforcing frame 20 may be formed by including a first surface 21 parallel to the height direction of the vehicle and a second surface 22 formed to extend from the first surface 21, and a protruding portion 23a and a recess portion 23c may be provided on the second surface 22. The protruding portion 23a and the recess portion 23c may be formed repeatedly.

For example, the protruding portion 23a and the recess portion 23c may be alternately repeatedly disposed in the first direction to form a waveform. Specifically, the waveform may have a shape of a right angle such as a right angle wave, may be formed into a curve such as a sine wave, or may be formed like a sawtooth wave. In the shape such as a right angle wave, parallel portions may be formed from the protruding portion 23a and the recess portion 23c, and In the shape such as a sine wave, the protruding portion 23a and the recess portion 23c may be formed in a shape such as a line, rather than a surface, and a boundary therebetween may not be clear. In addition, in the case of a shape such as a sawtooth wave, the protruding portion 23a and the recess portion 23c are formed in a shape such as a line, rather than a surface, but the boundary between the recess portion 23c and the protruding portion 23a may be clearly distinguished. However, it is not limited to a specific shape.

A height portion 23b connecting the protruding portion 23a and the recess portion 23c may be formed between the protruding portion 23a and the recess portion 23c, and the shape of the height portion 23b is not limited. The larger the height portion 23b, the more effective it may be, but it may vary depending on the material and processing method.

For example, the protruding portion 23a and the recess portion 23c may be formed in a part or an entire region of the second surface 22 of the reinforcing frame 20.

For example, the protruding portion 23a and the recess portion 23c may be beads formed by beading processing, and the bead portion 23 may include a protruding portion 23a, a recess portion 23c, and a height portion 23c. Beading processing is inexpensive and, in the case of a plate material, can be formed over a relatively large area in a single process, making it easy to manufacture.

Since the protruding portion 23a and the recess portion 23c are formed on the second surface 22, the effect of absorbing more impacts is provided when there is an impact in the first direction.

The reinforcing frame 20 may be formed by bending a single plate. Since a single plate is formed by bending, processing is easy, and a joint area is minimized, a problem such as separation due to impacts may be prevented. The plate forming the reinforcing frame 20 may be a steel material having a tensile strength of 980 MPa or more. In order to have sufficient absorption capacity against external impacts, the reinforcing frame 20 may be formed of a steel material having a tensile strength of 980 MPa or more. However, an embodiment thereof is not limited to the materials and processing methods described above.

As an example, the side frame 10 and the reinforcing frame 20 may be formed of different materials. The side frame 10 and the reinforcing frame 20 may be formed of aluminum or a steel material, and may also be formed by processing different materials. In the case of the side frame 10, the purpose is mainly to provide a characteristic of supporting during a collision, and the reinforcing frame 20 may be required to have a characteristic of absorbing energy in addition to supporting during a collision. Therefore, when the side frame 10 and the reinforcing frame 20 are formed of different materials, it may provide an effect which enables a dual design to satisfy different required characteristics.

However, the side frame 11 and the reinforcing frame 20 may be formed of the same material and are not limited to being formed of different materials.

For example, the reinforcing frame 20 may further include a flange 24 formed parallel to the first surface 21 and extending from the second surface 22, and may be welded and joined to the side frame 10 at the flange 24.

When the reinforcing frame 20 and the side frame 10 are fixed while the flange 24 is formed, the reinforcing frame 20 and the side frame 10 are fixed by surface contact, so it can provide a more stable fixing effect than when there is no flange 24. The reinforcing frame 20 and the side frame 10 may be welded and joined to form a second joint portion W2.

When the reinforcing frame 20 is processed and integrally formed of a plate material, the flange 24 may also be bent and formed and integrally formed. However, the shape and processing method of the flange 24 are not limited to the above-mentioned example.

In addition, the first surface 21 may be in contact with at least a portion of the second side frame 12, and may be welded or joined by an adhesive material at the contact portion.

The first surface 21 may directly absorb external impact by at least partly contacting the second side frame 12 and provide the effect of quickly dispersing the impact transmitted through the second side frame 12. It may be joined by welding or using an adhesive material to form a third joint portion W3.

According to an embodiment of the present disclosure, an angle (θ) of a portion in which the first surface 21 and the second surface 22 are connected may be an obtuse angle. That is, the angle may have a value within 90 degrees and 180 degrees.

An angle of the reinforcing frame 20 connecting the first surface 21 and the second surface 22 may be formed as an obtuse angle. When the angle of the reinforcing frame 20 is an obtuse angle, a larger area of the reinforcing frame 20 may be set as compared to the case when the angle of the reinforcing frame 20 is a right angle, and when formed in this manner, the effect of increasing the area which absorbs external impact may be obtained.

In addition, the second surface 22 may be formed at both ends of the first surface 21 in the second direction, and the reinforcing frames 20 may be symmetrical to each other with respect to a third direction, which is a width direction of the vehicle.

For stable energy absorption, the second surface 22 may be formed at both ends of the first surface 21, and the reinforcing frame 20 may be formed symmetrically with respect to the third direction to evenly distribute energy.

A frame for an electric vehicle according to an embodiment of the present disclosure may further include a side sill 30 and a reinforcing frame 40.

The side sill 30 may be located on one side of the side frame 10 in the third direction, and have a second hollow portion 33 with a closed cross-section formed therein to extend in the first direction.

The reinforcing frame 40 includes a bent or curved shape, may be disposed in the second hollow portion 33, and may be continuous in the first direction.

The side sill 30 is a portion located on the body 3 (see FIG. 1), and may be located on one side of the side frame 10 in a third direction. As an example, the side sill 30 may be located close to the outside of the vehicle in the third direction of the side frame 10. That is, when looking at the overall structure of the vehicle, a battery 2 (see FIG. 1) may be provided on the innermost side in the third direction, then a side frame 10 may be provided, and then a side sill 30 may be provided. The side sill 30 may have a closed cross-section formed therein, and a second hollow portion 33 may be formed. Such a cross-sectional shape is formed to extend in the first direction.

For example, the closed cross-section may be formed to be polygonal, but an embodiment thereof is not limited thereto, and may be formed as a circular pipe shape, or may form a complex cross-section having a plurality of closed cross-sections.

In addition, a reinforcing frame 40 including a bent or curved shape may be located in a second hollow portion 33. As an example, the reinforcing frame 40 may be configured to include a first reinforcing portion 41 and a second reinforcing portion 42, but an embodiment thereof is not limited thereto, and may include all shapes, materials, etc., which are located in the second hollow portion 33 and help protect the battery and the occupants from external force in the second direction.

In addition, the side sill 30 may be joined to a reinforcing frame 40 to provide an effect of more effectively absorbing energy from an impact in a third direction.

The side sill 30 may include a first side sill 31, a second side sill 31b joined to the first side sill 31 to form a second hollow portion 33, together with the first side sill 31, and a first side sill flange 34 and a second side sill flange 35, to which the first side sill 31 and the second side sill 32 are joined.

The reinforcing frame 40 includes a bent or curved shape, is located in the second hollow portion 33, is formed to be continuous in the first direction, and to be in contact with at least a portion of the first side sill 31.

As an example, referring to FIG. 5, a first reinforcing portion 41 and a second reinforcing portion 42 may be formed, and the first reinforcing portion 41 may be disposed in the second hollow portion 33, and one side thereof may be joined to the first side sill 31 to form a first closed cross-section. The first reinforcing portion 41 may be joined to the first side sill 31 to form a first closed cross-section, thereby improving the mechanical rigidity of the vehicle side sill 31.

The first reinforcing portion 41 may include a first upper portion, a pair of first side portions, and a pair of first lower flanges 43.

A first side portion may be connected to the first upper portion at both ends thereof in the height direction, respectively. The first upper portion may have a curved shape in a first direction. A protruding surface P1 and an indented surface P2 may be alternately formed in the first direction, and an inclined surface P3 may be formed between the protruding surface P1 and the indented surface P2.

The first side portion may be formed to extend from the first upper portion, and to be in contact with an inner surface of the first side sill 31. The first reinforcing portion 41 may be bent and formed so that the first side portion and the first lower flange 43 are disposed to intersect each other.

The first lower flange 43 may be joined to the inner surface of the first side sill 31.

A second reinforcing portion 42 may be disposed in the second hollow portion 33, and one side thereof may be joined to the first reinforcing portion 41 to form a second closed cross-section. The second reinforcing portion 42 may have one end joined to the first reinforcing portion 41 to form a second closed cross-section, thereby improving the mechanical rigidity of the vehicle side sill 30.

The second reinforcing portion 42 may include a second upper portion, a pair of second side portions, and a pair of second lower flanges.

The second upper portion may have a curved shape in a first direction. A protruding surface P1 and an indented surface P2 may be alternately formed in the first direction, and an inclined surface P3 may be formed between the protruding surface P1 and the indented surface P2. The second upper portion may be planar. Accordingly, when an adhesive, or the like is applied to the second upper portion for adhesion to the second side sill 32, the adhesive strength of the second upper portion may be improved, and the convenience of adhesion and assembly work may be improved.

A second side portion may be connected to both ends of the second upper portion in the height direction, respectively.

The second side portion may extend from the second upper portion, and may be formed to extend in a second direction to the first side sill 31. The second lower flange of the second reinforcing portion 42 may be joined to the first side portion of the first reinforcing portion 41.

The first reinforcing portion 41 and the second reinforcing portion 42 may have a fitting portion 44 which is fitted and joined to each other.

For example, the first reinforcing portion 41 and the second reinforcing portion 42 may have an unevenness portion P formed continuously over the entire side sill 30 in the first direction.

By including the unevenness portion P, the rigidity may be improved without increasing a thickness of a material such as a steel material forming the first reinforcing portion 41 and the second reinforcing portion 42.

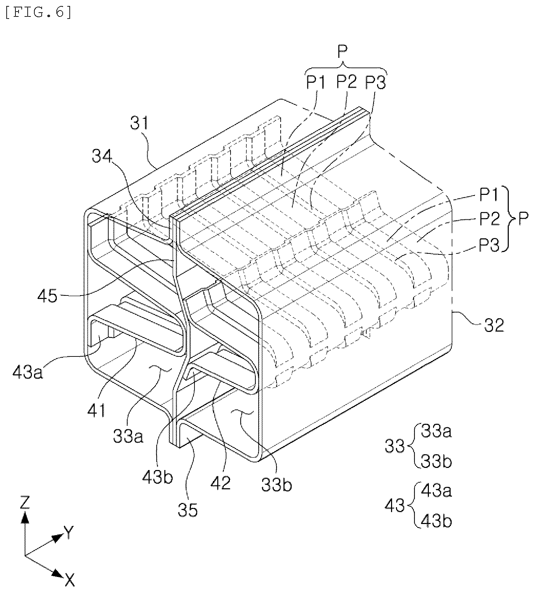

As another example, referring to FIG. 6, in addition to the first reinforcing portion 41 and the second reinforcing portion 42, a diaphragm portion 45 may be further included. When the diaphragm portion 45 is formed, the diaphragm portion 34 may be formed to divide the second hollow portion 33, so that a 2-1 hollow portion 33a and a 2-2 hollow portion 33b may be formed, and a first side sill 31 and a second side sill 32 may be formed to be stably compressed and deformed by an external impact in a third direction. Therefore, the energy absorption capacity due to collision energy is further improved. The diaphragm portion 45 may be located to be in contact with the first upper portion of the first reinforcing portion 41 and the second lower flange of the second reinforcing portion 42. A curved shape in the second direction may be further added in the central portion. Since there is such a curved shape, crushing deformation due to impacts can be advantageous.

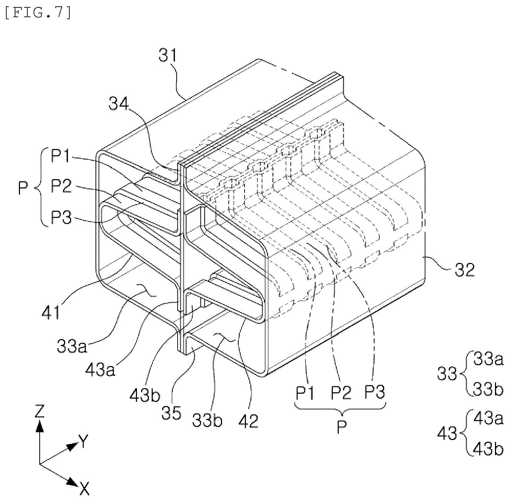

As another example, referring to FIG. 7, the first reinforcing portion 41 and the second reinforcing portion 42 may be formed symmetrically with a diaphragm portion 45 interposed therebetween. Therefore, a first lower flange 43a of the first reinforcing portion 41 and a second lower flange 43b of the second reinforcing portion 42 may be formed while being in contact with the diaphragm portion 45.

The shape and structure of the reinforcing frame 40 are examples, and are not limited to the above-described examples.

Hereinafter, in the embodiments described above, the same configuration will be cited from the above description unless there is a special difference.

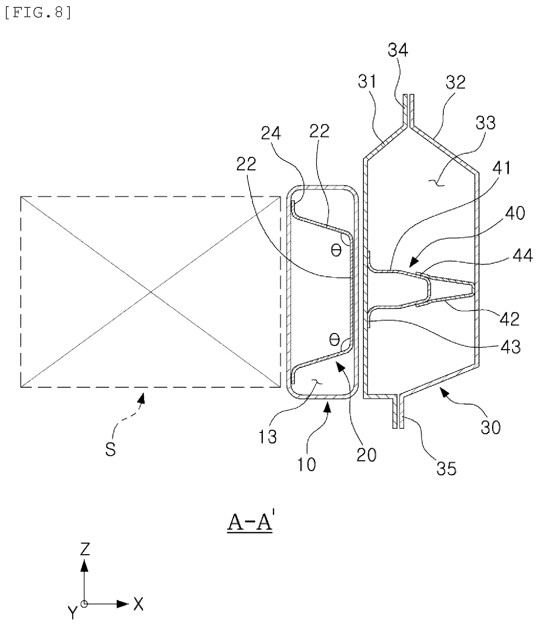

FIGS. 8 to 10 illustrate a frame for an electric vehicle according to another embodiment of the present disclosure.

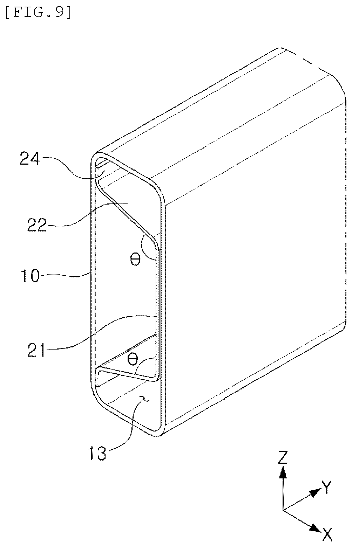

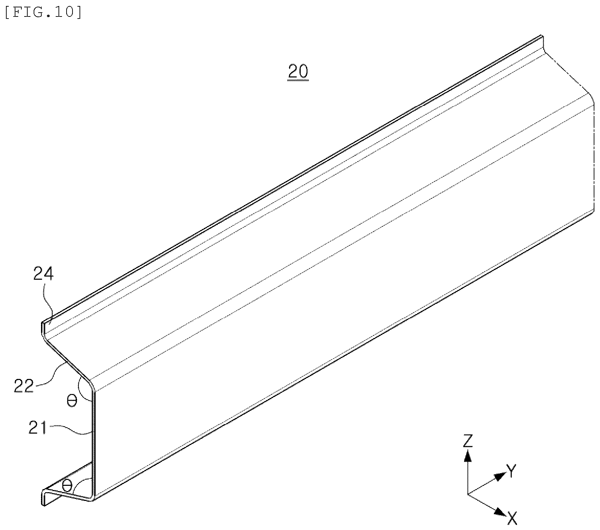

FIG. 8 is a cross-sectional view of a portion taken along line A-A' in FIG. 1 of a structure of a frame for an electric vehicle according to another embodiment of the present disclosure, FIG. 9 is a perspective view of a portion of a side frame and a reinforcing frame according to an embodiment of the present disclosure, and FIG. 10 is a perspective view of a reinforcing frame according to another embodiment of the present disclosure.

According to another embodiment of the present disclosure, a frame for an electric vehicle having defined therein a battery space S in which a battery is located, includes a side frame 10 located in a portion of the periphery of the battery space S, and including a first hollow portion 13, with a closed cross-section formed therein, and extending in a first direction, which is a longitudinal direction of the vehicle, a reinforcing frame 20 located in the first hollow portion 13 and including a surface formed in a second direction, which is a width direction of the vehicle, and a side sill 30 located on one side of the side frame 10 in the second direction, and having a second hollow portion 33 with a closed cross-section formed therein to extend in the first direction, the reinforcing frame 20 includes a first surface 21 parallel to the second direction, which is a height direction of the vehicle, and a second surface 22 formed to extend from the first surface 21, and to be in contact with a portion of the side frame 10, and an angle (θ) of a portion at which the first surface 21 and the second surface 22 are connected may be an obtuse angle.

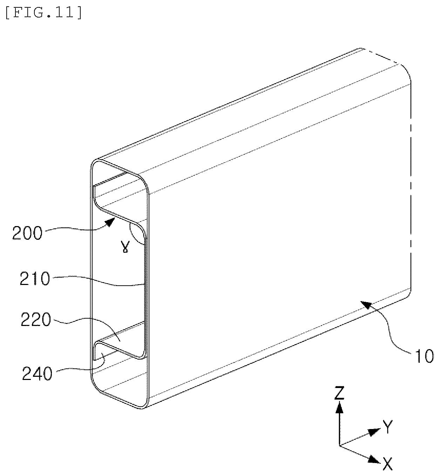

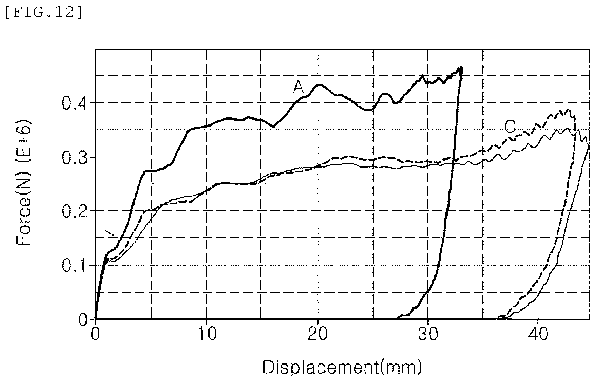

FIG. 11 illustrates a structure of a conventional side frame, and FIG. 12 is a graph illustrating an amount of deformation due to impacts in a structure of an embodiment of the present disclosure and a conventional side frame. Specifically, FIG. 12 is a graph comparing a joint structure of the side frame and the reinforcing frame of the first embodiment (FIG. 3a) and the second embodiment (FIG. 9) with the conventional side frame (FIG. 11).

The conventional side frame 10 may have the same shape as the side frame 10 of the present disclosure. In a structure of a reinforcing frame 200, an angle (γ) of the reinforcing frame 200 is formed as a right angle (90 degrees), and a recess portion 23c and the protrusion portion 23a are not formed therein. For example, a first surface 210, a second surface 220, and a flange 240 may be formed, and the angle (γ) between the first surface 210 and the second surface 220 may be formed as a right angle.

Compared to the present disclosure, the side frame 10 is relatively prone to deformation in a collision in a third direction, which may make it difficult to protect the battery of the electric vehicle or to protect passengers.

The shapes of the conventional side frame 10 and reinforcing frame 200 is as shown in FIG. 11, and a simulation result value for the conventional shape is shown in FIG. 12 as a thin solid line without any special notation.

In the case of the present disclosure, a result value for the side frame 10 and the reinforcing frame 20 of the shape shown in FIG. 3a is shown as A, and a result value for the side frame 10 and the reinforcing frame 20 of the shape shown in FIG. 9 is shown as C, which are the result values interpreted based on the shape shown in each figure.

A total weight of the conventional side frame 10 and the reinforcing frame 200 and a weight of the side frame 10 and the reinforcing frame 20 according to each embodiment of the present disclosure are the same. To this end, a thickness of the side frame 10 and the reinforcing frame 20 was adjusted.

A support strength may be compared based on a point at which rapid deformation occurs. As a result of the interpretation, according to a result graph including the conventional reinforcing frame 200, an external impact may be supported up to 352.2 KN, and the deformation at this time is 44.6 mm.

According to a result graph of the side frame 10 and the reinforcing frame 20 according to an embodiment of the present disclosure, an external impact of up to 466.4KN may be supported, and the deformation at this time is 33.0mm.

According to a result graph of the side frame 10 and the reinforcing frame 20 according to another embodiment of the present disclosure, it can be seen that an external impact of up to 388.0KN may be supported, and the deformation at this time is 43.4mm.

In both examples, the support strength is greater, and the deformation is formed smaller than that in the conventional case. Therefore, it can be seen that in the case of the present disclosure, the amount of deformation is smaller when subjected to the impact in a third direction from the outside of the vehicle, while supporting a greater force.

That is, it can be seen that the energy absorption capacity of the side frame 10 and the reinforcing frame 200 of the present disclosure is increased compared to the structure of the conventional side frame 10 and reinforcing frame 200, thereby providing the effect of increased support strength and reduced deformation. Thereby, a safe vehicle may be provided by protecting the passengers and the battery.

While example embodiments have been illustrated and described above, it will be apparent to those skilled in the art that modifications and variations could be made without departing from the scope of the present disclosure as defined by the appended claims.

### Description of Reference Numerals

| | | | |
|---|---|---|---|
| 1: | Frame | 2: | Battery |
| 3: | Body | S: | Battery space |
| 10: | Side frame | 11: | First side frame |
| 12: | Second side frame | 13: | First hollow portion |
| 20: | Reinforcing frame | 21: | First surface |
| 22: | Second surface | 23: | Bead portion |
| 23a: | Protruding portion | 23b: | Height portion |
| 23c: | Recess portion | 24: | Flange |
| 30: | Side sill | 31: | First side sill |
| 32: | Second side sill | 33: | Second hollow portion |
| 34: | First sill flange | 35: | Second sill flange |
| 40: | Reinforcing frame | 41: | First reinforcing portion |
| 42: | Second reinforcing portion | 43: | Reinforcing flange |
| 44: | Fitting portion | 45: | Diaphragm portion |
| W1: | First joint portion | W2: | Second joint portion |
| W3: | Third joint portion | θ: | Angle |

## Claims

1. Provided is a frame for an electric vehicle having defined therein a battery space in which a battery is located, the frame for an electric vehicle, comprising:
a side frame located in a portion of the periphery of the battery space, including a first hollow portion with a closed cross-section formed therein, and extending in a first direction, which is a longitudinal direction of a vehicle; and
a reinforcing frame located in the first hollow portion, wherein at least a portion of the reinforcing frame is in contact with the side frame,
wherein the reinforcing frame includes a first surface parallel to a second direction, which is a height direction of the vehicle, and
a second surface formed to extend from the first surface, and to be in contact with a portion of the side frame, and
the second surface has a protruding portion and a recess portion, which are protruding and indented, in the second direction.

2. The frame for an electric vehicle of claim **1,** wherein the reinforcing frame is formed to extend in the first direction.

3. The frame for an electric vehicle of claim 2, wherein the protruding portion and the recess portion are alternately repeated in the first direction to form a waveform.

4. The frame for an electric vehicle of claim 1, further comprising:
a side sill located on one side of the side frame in the second direction, and having a second hollow portion with a closed cross-section formed therein to extend in the first direction; and
a reinforcing frame including a bent or curved shape, and located in the second hollow portion and continuous in the first direction.

5. The frame for an electric vehicle of claim 3, wherein an angle at which the first and second surfaces are connected is an obtuse angle.

6. The frame for an electric vehicle of claim 5, wherein the second surface is formed at both ends of the first surface in the second direction, and
the reinforcing frame is symmetrical to each other with respect to a third direction, which is a width direction of the vehicle.

7. The frame for an electric vehicle of claim 1, wherein the reinforcing frame further includes a flange formed parallel to the first surface and extending from the second surface, and is welded and joined to the side frame at the flange.

8. The frame for an electric vehicle of claim 4, wherein the side frame includes a first side frame adjacent to the battery space and a second side frame adjacent to the side sill,
wherein the side frame is formed by combining the first side frame and the second side frame, and
at least a portion of the first surface is in contact with the second side frame, and is welded or joined by an adhesive material at the contact portion.

9. The frame for an electric vehicle of claim 1, wherein the side frame is formed of aluminum or a steel material.

10. The frame for an electric vehicle of claim 9, wherein the side frame and the reinforcing frame are formed of different materials.

11. The frame for an electric vehicle of claim 1, wherein the reinforcing frame is processed by bending and forming a single plate.

12. The frame for an electric vehicle of claim 11, wherein the plate material is a steel material having a tensile strength of 980 MPa or more.

13. Provided is a frame for an electric vehicle having defined therein a battery space in which a battery is located, the frame for an electric vehicle, comprising:
a side frame located in a portion of the periphery of the battery space, including a first hollow portion with a closed cross-section formed therein, and extending in a first direction, which is a longitudinal direction of a vehicle;
a reinforcing frame located in the first hollow portion, and including a surface formed in a second direction, which is a width direction of the vehicle; and
a side sill located on one side of the side frame in the second direction, and having a second hollow portion with a closed cross-section formed therein to extend in the first direction,
wherein the reinforcing frame includes a first surface parallel to the second direction, which is a height direction of the vehicle, and a second surface formed to extend from the first surface, and to be in contact with a portion of the side frame, and
an angle at which the first and second surfaces are connected is an obtuse angle.
